# EUROPEAN PATENT APPLICATION

(11) **EP 4 369 851 A1**
(43) Date of publication of application: **15.05.2024**
(21) Application number: 22836821.3
(22) Date of filing: 01.07.2022
(51) Int. Cl.: H04W 76/28, H04W 68/00

(54) **WAKE-UP METHOD AND DEVICE AND TERMINAL**

(30) Priority: 07.07.2021 CN 202110767596
(71) Applicant: Vivo Mobile Communication Co., Ltd., Dongguan, Guangdong 523863 (CN)
(72) Inventor: QU, Xin, Dongguan, Guangdong 523863 (CN); PAN, Xueming, Dongguan, Guangdong 523863 (CN); SHEN, Xiaodong, Dongguan, Guangdong 523863 (CN)
(74) Representative: Lavoix
(86) International application number: PCT/CN2022/103321
(87) International publication number: WO 2023/280070

(57) **Abstract**

This application relates to the field of communication technologies, and discloses a method and an apparatus for wakeup, and a terminal. The method includes: A first module of the terminal obtains a wakeup signal; and in a case that a first target occasion is an occasion outside a paging time window (PTW) of a first discontinuous reception (DRX) cycle, a second module of the terminal is triggered to switch to an idle state. The first target occasion is determined based on an occasion on which the first module obtains the wakeup signal, and the first DRX cycle includes the PTW.

## Description

### CROSS-REFERENCE TO RELATED APPLICATIONS

This application claims priority to Chinese Patent Application No. 202110767596.8, filed on July 7, 2021 in China, which is incorporated herein by reference in its entirety.

### TECHNICAL FIELD

This application relates to the field of communication technologies, and in particular to a method and an apparatus for wakeup, and a terminal.

### BACKGROUND

In the conventional technologies, to prolong standby time for a terminal, a discontinuous reception (Discontinuous Reception, DRX) cycle or an extended discontinuous reception (Extended DRX, eDRX) cycle is set. Because the DRX cycle or an eDRX cycle is relatively long, a relatively large paging delay is caused, which is not applicable to a service that has requirements for both a low delay and long standby time. For example, in an automatic fire alarm detection and fire extinguishing system, when a fire condition is detected by a sensor, a fire curtain door needs to be closed and an automatic fire extinguisher needs to be opened within a short time. In this scenario, a long paging cycle is not applicable.

That is, the long paging cycle in the conventional technologies may help to reduce power consumption but cause a relatively long wakeup delay.

### SUMMARY

Embodiments of this application provide a method and an apparatus for wakeup, and a terminal, to resolve a problem of a long wakeup delay caused by a long paging cycle.

According to a first aspect, a method for wakeup is provided, including:
a first module of a terminal obtains a wakeup signal;
in a case that a first target occasion is an occasion outside a paging time window (PTW) of a first discontinuous reception (DRX) cycle, a second module of the terminal is triggered to switch to an idle state, where the first target occasion is determined based on an occasion on which the first module obtains the wakeup signal, and the first DRX cycle includes the PTW.

According to a second aspect, an apparatus for wakeup is provided, including:
an obtaining module, configured to obtain a wakeup signal by using a first module; and
a triggering module, configured to trigger, in a case that a first target occasion is an occasion outside a paging time window (PTW) of a first discontinuous reception (DRX) cycle, a second module to switch to an idle state, where the first target occasion is determined based on an occasion on which the first module obtains the wakeup signal, and the first DRX cycle includes the PTW.

According to a third aspect, a terminal is provided. The terminal includes a processor, a memory, and a program or an instruction stored in the memory and capable of running in the processor. When the program or instruction is executed by the processor, the steps of the method for wakeup according to the first aspect are implemented.

According to a fourth aspect, a readable storage medium is provided, where the readable storage medium stores a program or an instruction, and when the program or the instruction is executed by a processor, the steps of the method for wakeup according to the first aspect are implemented.

According to a fifth aspect, a chip is provided. The chip includes a processor and a communication interface. The communication interface is coupled to the processor, and the processor is configured to run a program or an instruction in a network side device, to implement the method for wakeup according to the first aspect.

According to a sixth aspect, a computer program product is provided. The computer program product is stored in a non-transient storage medium, and the computer program product is executed by at least one processor to implement the method for wakeup in the first aspect.

According to a seventh aspect, a communication device is provided. The communication device is configured to perform the method for wakeup in the first aspect.

In an embodiment of this application, a first module of a terminal obtains a wakeup signal. In a case that a first target occasion is an occasion outside a paging time window (PTW) of a first discontinuous reception (DRX) cycle, a second module is triggered to switch to an idle state. The first target occasion is determined based on an occasion on which the first module obtains the wakeup signal, and the first DRX cycle includes the PTW. In the foregoing, on the occasion outside the PTW of the first DRX cycle, the second module of the terminal is triggered to switch to the idle state. In other words, the terminal wakes up the second module by using the wakeup signal. This may shorten a wakeup delay for the second module, and meet a requirement for a low delay of data transmission.

### BRIEF DESCRIPTION OF DRAWINGS

FIG 1 is a structural diagram of a network system according to an embodiment of this application;
FIG 2 is a flowchart of a method for wakeup according to an embodiment of this application;
FIG 3 and FIG 4 are schematic diagrams of composition of a first DRX cycle according to an embodiment of this application;
FIG 5 is a structural diagram of an apparatus for wakeup according to an embodiment of this application;
FIG 6 is a structural diagram of a communication device according to an embodiment of this application; and
FIG 7 is a structural diagram of a terminal according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on embodiments of this application shall fall within the protection scope of this application.

The terms "first", "second", and the like in this specification and claims of this application are used to distinguish between similar objects instead of describing a specific order or sequence. It should be understood that data used in this way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects. In |this application, 'transmission' means signal transmission, not signal transmission in a narrow sense.

It should be noted that the technologies described in embodiments of this application are not limited to a long term evolution (Long Term Evolution, LTE)/LTE-advanced (LTE-Advanced, LTE-A) system, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in embodiments of this application may be used interchangeably. The technologies described can be used in both the systems and the radio technologies mentioned above as well as other systems and radio technologies. However, a new radio (New Radio, NR) system is described in the following description for illustrative purposes, and the NR terminology is used in most of the following description, although these technologies can also be applied to applications other than the NR system application, such as the 6th generation (6^{th} Generation, 6G) communication system.

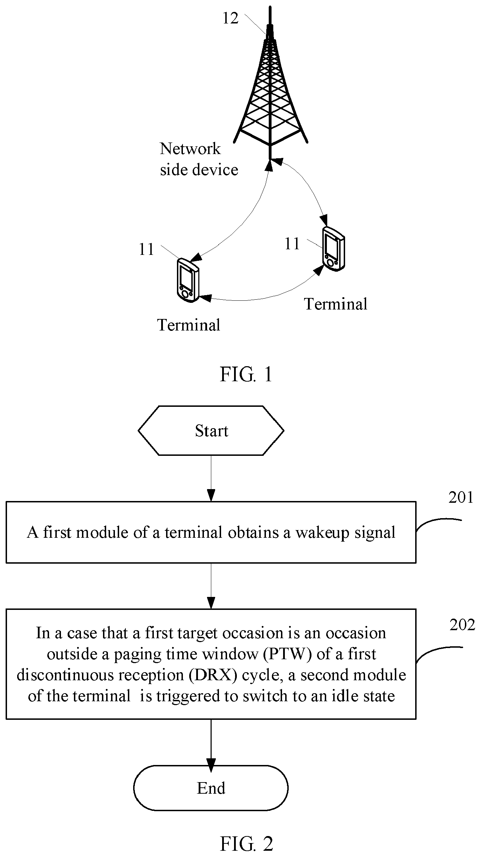

FIG 1 is a structural diagram of a wireless communication system in which embodiments of this application may be used. The wireless communication system includes a terminal 11 and a network side device 12. The terminal 11 may also be referred to as a terminal device or user equipment (User Equipment, UE). The terminal 11 may be a terminal side device such as a mobile phone, a tablet computer (Tablet Computer), a laptop computer (Laptop Computer), or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or a vehicle user equipment (Vehicle User Equipment, VUE), or pedestrian user equipment (Pedestrian User Equipment, PUE). The wearable device includes a band, a headset, eyeglasses, or the like. It should be noted that a specific type of the terminal 11 is not limited in embodiments of this application. The network device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a wireless local area network (Wireless Local Area Networks, WLAN) access point, a wireless fidelity (Wireless Fidelity, WiFi) node, a transmitting receiving point (Transmitting Receiving Point, TRP), or other appropriate terms in the field, provided that the same technical effects are achieved, the base station is not limited to specific technical vocabulary. It should be noted that in embodiments of this application, a base station in the NR system is merely used as an example, but does not limit a specific type of the base station.

With reference to the accompanying drawings, a method for wakeup according to an embodiment of this application is described in detail by using a specific embodiment and an application scenario for the embodiment.

Referring to FIG 2, FIG 2 is a flowchart of a method for wakeup according to an embodiment of this application. The method for wakeup includes the following steps.

Step 201: A first module of a terminal obtains a wakeup signal.

The first module may be a wakeup signal receiving module of the terminal. The wakeup signal includes at least one of the following: identification information of the terminal; and identification information of a group in which the terminal belongs to.

Step 202: Trigger a second module to switch to an idle state when a first target occasion is an occasion outside a paging time window (Paging Time Window, PTW) of a first discontinuous reception (DRX) cycle. The first target occasion is determined based on an occasion on which the first module obtains the wakeup signal, and the first DRX cycle includes the PTW.

In a case that the first module receives the wakeup signal, if the first target occasion is an occasion outside the paging time window (Paging Time Window, PTW) of the first DRX cycle, the second module is triggered to switch to the idle state. The first DRX cycle may be understood as an extended discontinuous reception (Extended DRX, eDRX) cycle. The first DRX may include one PTW, and the PTW may include a plurality of second DRXs.

The first target occasion may be an occasion on which the first module obtains the wakeup signal. Alternatively, the first target occasion may be a trigger occasion on which switching the second module is triggered after the first module obtains the wakeup signal and the terminal decodes the wakeup signal. Alternatively, the first target occasion may be a next occasion, after a preset time period, of a start occasion that is the occasion on which the first module obtains the wakeup signal, and may be specifically set according to an actual situation, which is not limited herein. The second module may be a data transmission module of the terminal.

It should be noted that the second module is in the idle state. It indicates that the second module is waked up. In a case that the second module is in the idle state, the second module may monitor a paging signal.

In this embodiment, the first module of the terminal obtains the wakeup signal. In a case that the first target occasion is the occasion outside the paging time window (PTW) of the first discontinuous reception (DRX) cycle, the second module is triggered to switch to the idle state. The first target occasion is determined based on an occasion on which the first module obtains the wakeup signal, and the first DRX cycle includes the PTW. In the foregoing, on the occasion outside the PTW of the first DRX cycle, the second module of the terminal is triggered to switch to the idle state. In other words, the terminal wakes up the second module by using the wakeup signal. This may shorten a wakeup delay of the second module, and meet a requirement for a low delay of data transmission.

Within a time outside the PTW of the first DRX cycle, the second module is in a dormant state. If the second module of the terminal is triggered to switch, the second module switches from the dormant state to the idle state. When the second module is in the dormant state, a paging message is not monitored, and the dormant state may also be referred to as a sleep state. Power consumption may be reduced when the second module is in the dormant state.

In an embodiment of this application, the method for wakeup further includes: In case that the second module is in the idle state, the terminal controls the second module to monitor a paging message based on a second DRX cycle.

In an embodiment of this application, the method for wakeup further includes: The terminal controls the second module to monitor the paging message based on the second DRX cycle starting at a second target occasion. The second target occasion is an occasion on which switching the second module to the idle state is completed.

If the first target occasion is the occasion on which the first module obtains the wakeup signal, the second target occasion may be a next occasion of the first target occasion. After the second module obtains the wakeup signal, because it needs time for the second module to switch from the dormant state to the idle state, and a time period between the first target occasion and the second target occasion may be used for switching the second module.

In an embodiment of this application, the method for wakeup further includes: In a case that the second module is in the idle state, the terminal controls the second module to perform radio resource management (Radio Resource Management, RRM) measurement in the second DRX cycle.

In an embodiment of this application, the method further includes: The terminal controls the second module to monitor the paging message in the second DRX cycle in the PTW of the first DRX cycle. The PTW includes a plurality of the second DRX cycles.

That is, in the PTW of the first DRX cycle, the terminal controls the second module to monitor the paging message within the second DRX cycle in the PTW. Within a time outside the PTW of the first DRX cycle, the terminal wakes up the second module based on the wakeup signal, the second module is triggered to switch to the idle state, and the terminal monitors the paging message based on the second DRX cycle within the time outside the PTW of the first DRX cycle by using the second target occasion as a start occasion.

An eDRX cycle is configured for a second module (which may be understood as a master communication module). The second module monitors a paging occasion (Paging Occasion, PO) in each DRX cycle of the eDRX cycle, and performs RRM measurement. Within a time period between PTWs of two eDRX cycles, if a downlink service arrives, the master communication module may be waked up by using a first module (which may be understood as a low power consumption wakeup module), to reduce a wakeup delay for the second module while implementing low power consumption. In addition, the master communication module performs RRM measurement based on the eDRX cycle configuration, so that the terminal may perform resource management and mobility management.

The following uses an example to describe the method for wakeup according to this application.

The eDRX cycle is configured for the second module of the terminal. The first module may wake up the second module at a position outside the PTW within each eDRX cycle for the second module. When the second module is not waked up by the first module at the position, the first module is in the dormant state.

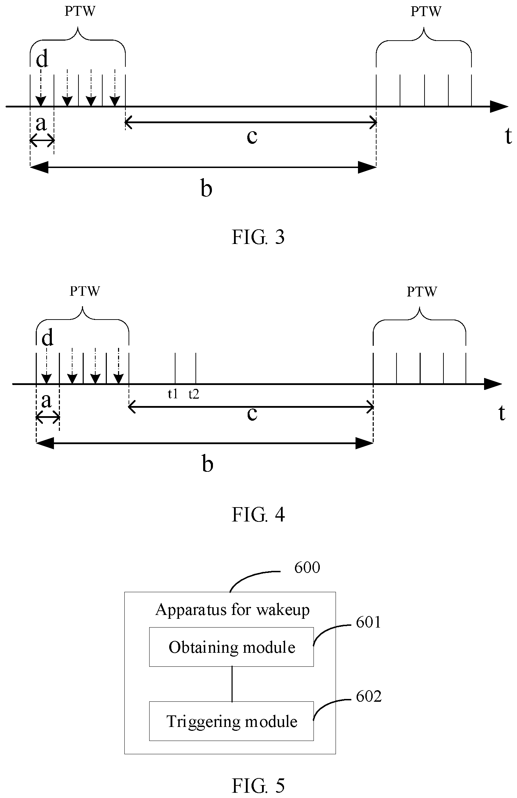

As shown in FIG 3, in the figure, a reference numeral a indicates one DRX cycle in a PTW, a reference numeral b indicates one eDRX cycle, and a reference numeral c indicates a time outside the PTW in the eDRX cycle. A second module is in a dormant state within the time indicated by the reference numeral c. If the first module receives a wakeup signal within the time indicated by the reference numeral c, a second module may be triggered to switch to an idle state, and the second module is waked up. A reference numeral d indicates a PO in the DRX cycle. The second module monitors a paging message once within each DRX cycle in a PTW of each eDRX cycle, and the second module performs RRM measurement in the PTW. Based on configuration for the second module, a measurement reference signal includes but is not limited to a synchronization signal block (Synchronization Signal Block, SSB). A terminal may perform RRM management and mobility management based on a measurement value of the measurement reference signal.

When downlink data arrives at a position outside the PTW, a transmitting end may send the wakeup signal on any occasion according to a requirement. After the first module receives the wakeup signal, the second module is triggered to switch to the idle state. After switching from the dormant state to the idle state, the second module monitors the paging message based on the DRX cycle. Further, the second module performs RRM measurement.

The first module receives the wakeup signal, to trigger the second module to switch to the idle state. When downlink data arrives, the first module detects the wakeup signal sent by the transmitting end, and determines that the wakeup signal includes information about waking up the terminal, for example, includes identification information of the terminal or identification information of a group in which the terminal belongs to. Then the first module triggers the second module to switch from the sleep state to the idle state. The second module monitors the paging message based on the DRX cycle. The second module may further perform RRM measurement. The second module is in the dormant state when the second module is not waked up by the first module. After the first module triggers the second module to switch, the first module may switch from an on state to an off state.

As shown in FIG 4, the eDRX cycle configured by a base station for the second module of the terminal is 17.92 ms, a length of the PTW is 5.12 ms, and the DRX cycle is 1.28 ms. At an occasion t1, the terminal receives the wakeup signal sent by the base station. The wakeup signal includes information about waking up the terminal, such as the identification information of the terminal or the identification information of the group in which the terminal belongs to. The first module detects information about the terminal included in the wakeup signal, to trigger the second module to switch from the dormant state to the idle state. Because it takes time for the second module to switch, after a time offset from a wakeup occasion (namely, an occasion on which the first module receives the wakeup signal), in FIG 4, at an occasion shown in t2, the second module monitors the paging message based on a DRX cycle of 1.28 ms, and performs subsequent data transmission based on the received paging message. In addition, the first module may further perform RRM measurement.

It should be noted that the method for wakeup provided in the embodiment of this application may be performed by an apparatus for wakeup or a control module that is in the apparatus for wakeup and that is configured to perform the method for wakeup.

In the following embodiment, an example in which the apparatus for wakeup performs the method for wakeup is used to describe the apparatus for wakeup provided in an embodiment of this application.

Referring to FIG 5, FIG 5 is a structural diagram of an apparatus for wakeup according to an embodiment of this application. The apparatus for wakeup 600 includes:
an obtaining module 601, configured to obtain a wakeup signal by using a first module; and
a triggering module 602, configured to trigger, in a case that a first target occasion is an occasion outside a paging time window (PTW) of a first discontinuous reception (DRX) cycle, a second module to switch to an idle state. The first target occasion is determined based on an occasion on which the first module obtains the wakeup signal, and the first DRX cycle includes the PTW.

Optionally, the apparatus for wakeup 600 further includes:
a first monitoring module, configured to control, in a case that the second module is in the idle state, the second module to monitor a paging message based on a second DRX cycle.

Optionally, a start occasion on which the second module is in the idle state is a second target occasion. The second target occasion is an occasion on which switching the second module to the idle state is completed.

Optionally, the apparatus for wakeup 600 further includes:
a second monitoring module, configured to control the second module to monitor the paging message within a second DRX cycle of the PTW of the first DRX cycle. The PTW includes a plurality of the second DRX cycles.

Optionally, the apparatus for wakeup 600 further includes:
a third monitoring module, configured to control the second module to monitor the paging message based on a second DRX cycle starting at a second target occasion. The second target occasion is an occasion on which switching the second module to the idle state is completed.

Optionally, within a time outside the PTW of the first DRX cycle, in a case that the second module is not triggered to switch to the idle state, the second module is in a dormant state.

Optionally, the apparatus for wakeup 600 further includes:
a measurement module, configured to control, in a case that the second module is in the idle state, the second module to perform radio resource management (RRM) measurement in the second DRX cycle.

Optionally, the wakeup signal includes at least one of the following:
identification information of the terminal; and
identification information of a group in which the terminal belongs to.

Optionally, the first module is a wakeup signal receiving module of the terminal, and the second module is a data transmission module of the terminal.

The apparatus for wakeup 600 in this embodiment of this application may be an apparatus, or a component, an integrated circuit, or a chip in the terminal.

The apparatus for wakeup 600 in this embodiment of this application may be an apparatus provided with an operating system. The operating system may be an Android (Android) operating system, may be an iOS operating system, or may be another possible operating system. This is not specifically limited in this embodiment of this application.

The apparatus for wakeup 600 provided in this embodiment of this application can implement processes implemented in the method embodiment in FIG 2, and a same technical effect can be achieved. To avoid repetition, details are not described herein again.

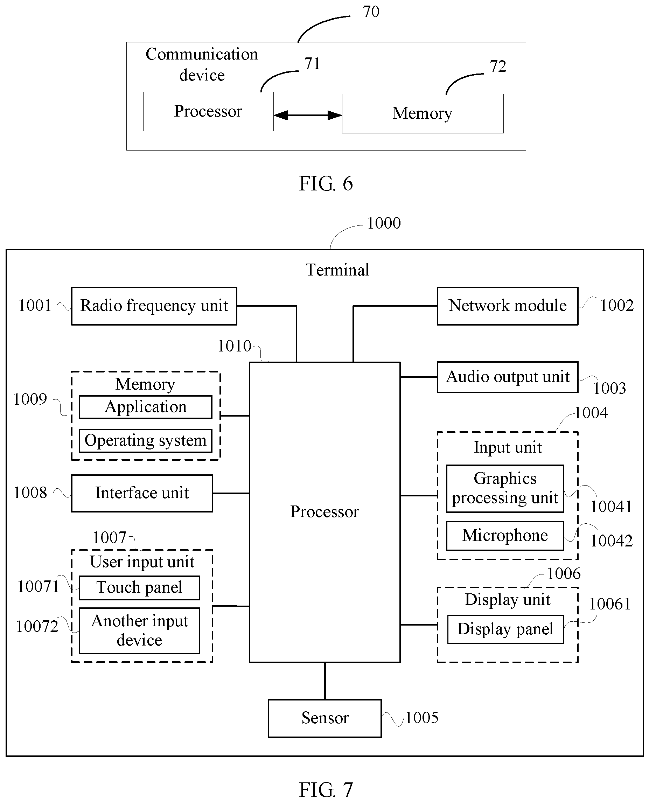

Optionally, as shown in FIG 6, an embodiment of this application further provides a communication device 70, including a processor 71, a memory 72, a program or an instruction that is stored in the memory 72 and that can be run on the processor 71. For example, when the communication device 70 is a terminal, the program or the instruction is executed by the processor 71 to implement processes of the embodiment of the method for wakeup shown in FIG 2, and a same technical effect can be achieved.

FIG 7 is a schematic diagram of a hardware structure of a terminal according to an embodiment of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG 7 constitutes no limitation on the terminal, and the terminal may include more or fewer components than those shown in the figure, or combine some components, or have different component arrangements. Details are not described herein.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 1001 sends the downlink data to the processor 1010 for processing, and sends uplink data to the base station. Generally, the radio frequency unit 1001 includes but is not limited to an antenna, at least one amplifier, a transceiver, a coupler, a low noise amplifier, a duplexer, and the like.

The memory 1009 may be configured to store a software program or an instruction and various pieces of data. The memory 1009 may mainly include a program or instruction storage area and a data storage area. The program or instruction storage area may store an operating system, and an application or an instruction required by at least one function (for example, a sound playing function or an image playing function). In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communication, for example, a baseband processor. It can be understood that, alternatively, the modem processor may not be integrated into the processor 1010.

The radio frequency unit 1001 is configured to obtain a wakeup a signal.

The processor 1010 is configured to trigger, in a case that a first target occasion is an occasion outside a paging time window (PTW) of a first discontinuous reception (DRX) cycle, a second module to switch to an idle state. The first target occasion is determined based on an occasion on which the wakeup signal is obtained, and the first DRX cycle includes the PTW.

Optionally, the processor 1010 is further configured to control, in a case that the second module is in the idle state, the second module to monitor a paging message based on a second DRX cycle.

Optionally, the processor 1010 is further configured to control the second module to monitor the paging message based on the second DRX cycle starting at a second target occasion. The second target occasion is an occasion on which switching the second module to the idle state is completed.

Optionally, the processor 1010 is further configured to control the second module to monitor the paging message within the second DRX cycle of the PTW of the first DRX cycle. The PTW includes a plurality of the second DRX cycles.

Optionally, within a time outside the PTW of the first DRX cycle, in a case that the second module is not triggered to switch to the idle state, the second module is in a dormant state.

Optionally, the processor 1010 is further configured to control, in a case that the second module is in the idle state, the second module to perform radio resource management RRM measurement in the second DRX cycle.

Optionally, the wakeup signal includes at least one of the following:
identification information of the terminal; and
identification information of a group in which the terminal belongs to.

Optionally, the first module is a wakeup signal receiving module of the terminal, and the second module is a data transmission module of the terminal.

The terminal 1000 provided in the foregoing embodiment can implement processes implemented in the method embodiment in FIG 2, and a same technical effect can be achieved. To avoid repetition, details are not described herein again.

An embodiment of this application further provides a readable storage medium. The readable storage medium may be non-volatile or may be volatile. The readable storage medium stores a program or an instruction. When the program or the instruction is executed by a processor, the processes of the foregoing method embodiments shown in FIG 2 are implemented, and a same technical effect can be achieved. To avoid repetition, details are not described herein again.

The processor is a processor in the terminal or a network side device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or an instruction in a network side device to implement the processes of the method embodiment in FIG 2, and a same technical effect can be achieved. To avoid repetition, details are not provided herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-transient readable storage medium. The computer program product is executed by at least one processor to implement the processes of the method embodiment in FIG 2, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware. In most circumstances, the former is a preferred implementation. Based on such understanding, the technical solutions of this application essentially or the part contributing to the prior art may be implemented in a form of a software product. The computer software product is stored in a storage medium (such as an ROM/RAM, a hard disk, or an optical disc), and includes several instructions for instructing a terminal (which may be mobile phone, a computer, a server, an air conditioner, a network, or the like) to perform the methods described in embodiments of this application.

Embodiments of this application are described above with reference to the accompanying drawings, but this application is not limited to the foregoing implementations, and the foregoing implementations are only illustrative and not restrictive. Under the enlightenment of this application, a person of ordinary skill in the art can make many forms without departing from the purpose of this application and the protection scope of the claims, all of which fall within the protection of this application.

## Claims

1. A method for wakeup, comprising:
obtaining, by a first module of a terminal, a wakeup signal; and
in a case that a first target occasion is an occasion outside a paging time window (PTW) of a first discontinuous reception (DRX) cycle, being triggered, by a second module of the terminal, to switch to an idle state, wherein the first target occasion is determined based on an occasion on which the first module obtains the wakeup signal, and the first DRX cycle comprises the PTW.

2. The method according to claim 1, wherein the method further comprises:
in a case that the second module is in the idle state, controlling, by the terminal, the second module to monitor a paging message based on a second DRX cycle.

3. The method according to claim 1, wherein the method further comprises: controlling, by the terminal, the second module to monitor a paging message based on a second DRX cycle starting at a second target occasion,
wherein the second target occasion is an occasion on which switching the second module to the idle state is completed.

4. The method according to claim 1, wherein the method further comprises:
controlling, by the terminal, the second module to monitor a paging message within a second DRX cycle of the PTW of the first DRX cycle, and the PTW comprises a plurality of the second DRX cycles.

5. The method according to claim 1, wherein, within a time outside the PTW of the first DRX cycle, in a case that the second module is not triggered to switch to the idle state, the second module is in a dormant state.

6. The method according to claim 2, wherein the method further comprises:
in a case that the second module is in the idle state, controlling, by the terminal, the second module to perform radio resource management RRM measurement in the second DRX cycle.

7. The method according to claim 1, wherein the wakeup signal comprises at least one of the following:
identification information of the terminal; and
identification information of a group which the terminal belongs to.

8. The method according to claim 1, wherein the first module is a wakeup signal receiving module of the terminal, and the second module is a data transmission module of the terminal.

9. An apparatus for wakeup, comprising:
an obtaining module, configured to obtain a wakeup signal by using a first module; and
a triggering module, configured to trigger, in a case that a first target occasion is an occasion outside a paging time window (PTW) of a first discontinuous reception (DRX) cycle, a second module to switch to an idle state, wherein the first target occasion is determined based on an occasion on which the first module obtains the wakeup signal, and the first DRX cycle comprises the PTW.

10. The apparatus according to claim 9, further comprising:
a first monitoring module, configured to control, in a case that the second module is in the idle state, the second module to monitor a paging message based on a second DRX cycle.

11. The apparatus according to claim 9, further comprising:
a second monitoring module, configured to control the second module to monitor the paging message within a second DRX cycle of the PTW of the first DRX cycle, wherein the PTW comprises a plurality of the second DRX cycles.

12. A terminal, comprising a processor, a memory, and a program or an instruction stored in the memory and capable of running in the processor, wherein when the program or instruction is executed by the processor, the steps of the method for wakeup according to any one of claims 1 to 8 are implemented.

13. A readable storage medium, wherein the readable storage medium stores a program or an instruction, and when the program or the instruction is executed by a processor, the steps of the method for wakeup according to any one of claims 1 to 8 are implemented.

14. A chip, comprising a processor and a communication interface, wherein the communication interface is coupled to the processor, and the processor is configured to run a program or an instruction, to implement the steps of the method for wakeup according to any one of claims 1 to 8.

15. A computer program product, wherein the computer program product is stored in a non-volatile storage medium, and the computer program product is executed by at least one processor, to implement the steps of the method for wakeup according to any one of claims 1 to 8.

16. A communication device, configured to perform the steps of the method for wakeup according to any one of claims 1 to 8.
